# EUROPÄISCHE PATENTANMELDUNG

(11) **EP 2 117 051 A2**
(43) Veröffentlichungstag der Anmeldung: **11.11.2009**
(21) Anmeldenummer: 09159024.0
(22) Anmeldetag: 29.04.2009
(51) Int. Cl.: H01L 31/042, H01L 31/048

(54) **Hinterlüftete Vorrichtung zur Befestigung von Photovoltaikmodulen an Dachunterkonstruktion**

(30) Priorität: 05.05.2008 DE 102008022153
(71) Anmelder: Röttger, Dieter, 58730 Fröndenberg (DE)
(72) Erfinder: Röttger, Dieter, 58730 Fröndenberg (DE)
(74) Vertreter: Ostermann, Thomas

(57) **Zusammenfassung**

Die Erfindung betrifft eine Vorrichtung zur Befestigung von Photovoltaikmodulen an einer Dachunterkonstruktion, wobei die Photovoltaikmodule insbesondere zur Indachmontage über Befestigungsmittel direkt an der Dachunterkonstruktion befestigbar sind, die Befestigungsmittel ein den Photovoltaikmodulen seitlich zugeordnetes Längsprofil und ein dem Photovoltaikmodul firstseitig zugeordnetes oberes Querprofil umfassen, ein den Photovoltaikmodulen auf der der Dachunterkonstruktion zugewandten Rückseite zugeordneter Hinterlüftungskanal zur rückseitigen Kühlung der Photovoltaikmodule mittels einer Hinterlüftungsströmung ausgebildet ist, als weiteres Befestigungsmittel eine in Richtung der Dachunterkonstruktion von dem rückseitigen Randbereich des Photovoltaikmoduls abragende Wandung vorgesehen ist, die den Hinterlüftungskanal begrenzt, und die dem Photovoltaikmodul zugewandte Oberseite der Dachunterkonstruktion eine untere Kanalwandung des Hinterlüftungskanals bildet, wobei die Dachunterkonstruktion eine ebene, die unter Kanalwandung bildende Oberseite (Unterspannbahn) aufweist und die Wandung eine durchgehende seitliche Kanalwandung derart umfasst, dass sie zumindest bereichsweise dicht an die Oberseite der Dachunterkonstruktion anschließt.

## Beschreibung

Die Erfindung betrifft eine Vorrichtung zur Befestigung von Photovoltaikmodulen an einer Dachunterkonstruktion, wobei die Photovoltaikmodule insbesondere zur Indachmontage über Befestigungsmittel direkt an der Dachunterkonstruktion befestigbar sind, die Befestigungsmittel ein den Photovoltaikmodulen seitlich zugeordnetes Längsprofil und ein dem Photovoltaikmodul firstseitig zugeordnetes oberes Querprofil umfassen, ein den Photovoltaikmodulen auf der der Dachunterkonstruktion zugewandten Rückseite zugeordneter Hinterlüftungskanal zur rückseitigen Kühlung der Photovoltaikmodule mittels einer Hinterlüftungsströmung ausgebildet ist, als weiteres Befestigungsmittel eine in Richtung der Dachunterkonstruktion von dem rückseitigen Randbereich des Photovoltaikmoduls abragende Wandung vorgesehen ist, die den Hinterlüftungskanal begrenzt, und die dem Photovoltaikmodul zugewandte Oberseite der Dachunterkonstruktion eine untere Kanalwandung des Hinterlüftungskanals bildet.

Ferner betrifft die Erfindung ein Verfahren zur Demontage eines Photovoltaikmoduls, wobei das Photovoltaikmodul in einer Montagestellung an einem unteren Randbereich von einem ersten Querprofil und an einem oberen Randbereich von einem zweiten Querprofil festgelegt wird.

Aus der DE 202 09 940 U1 ist eine Befestigungsvorrichtung zur Aufnahme von Photovoltaikmodulen bekannt, die direkt mit der Dachunterkonstruktion verbunden wird. Zur Eindeckung einer vorgesehenen Dachfläche sind die Photovoltaikmodule hierbei schachbrettartig neben- und übereinander angeordnet. Zur Aufnahme der Befestigungsmittel für die Photovoltaikmodule weist die Dachunterkonstruktion oberhalb einer beispielsweise als Unterspannbahn ausgeführten flächigen Oberseite eine zu den Dachsparren quer verlaufende, zum Dachfrist parallele Holzlattung auf. An dieser Querlattung stützen sich die Befestigungsmittel ab, die sich in die Richtung der Dachsparren erstrecken und die Photovoltaikmodule seitlich fixieren.

Um das Eindringen von Wasser in die Dachkonstruktion zu verhindern, sind zwischen zwei Reihen von Photovoltaikmodulen Querprofile als Wasserleitbleche vorgesehen, wobei sich das firstseitige Ende des Querprofils unterhalb des traufseitigen Endabschnitts eines oberen Photovoltaikmoduls und das traufseitige Ende des Querprofils oberhalb des firstseitigen Endes eines unteren Photovoltaikmoduls befindet. Die Querprofile sind hierbei wie die Photovoltaikmodule mit den sich in Dachsparrenrichtung erstreckenden Befestigungsmitteln verbunden.

Zur Steigerung des Wirkungsgrads der Photovoltaikmodule ist deren Kühlung mittels einer Hinterlüftungsströmung vorgesehen. Hierzu bilden die Oberseite der Dachunterkonstruktion, die Rückseite der Photovoltaikmodule sowie die den Photovoltaikmodulen seitlich zugeordneten Befestigungsmittel einen Hinterlüftungskanal, der sich in Richtung der Dachsparren erstreckt. Nachteilig ist, dass die zur Steigerung des Wirkungsgrades der Photovoltaikmoduls notwendige rückseitige Kühlung der Photovoltaikmodule mittels der Hinterlüftungsströmung durch die quer zur Strömungsrichtung vorgesehenen Holzlattung behindert und der Strömungsquerschnitt reduziert wird. Ferner ist das Photovoltaikmodul traufseitig nicht gegen Verrutschen gesichert, wodurch insbesondere die Montage und Demontage der Photovoltaikmodule erschwert ist.

Aufgabe der vorliegenden Erfindung ist es, eine Befestigungsvorrichtung zur Indachmontage von Photovoltaikmodulen derart weiterzubilden, dass die Hinterlüftung der Photovoltaikmodule sowie die Montage- und Demontagefähigkeit verbessert werden. Ferner ist es Aufgabe der Erfindung, ein Verfahren zur einfachen und sicheren Demontage auch einzelner Photovoltaikmodule anzugeben.

Zur Lösung dieser Aufgabe ist die Erfindung in Verbindung mit dem Oberbegriff des Patentanspruchs 1 **dadurch gekennzeichnet, dass** die Dachunterkonstruktion eine ebene, die unter Kanalwandung bildende Oberseite aufweist und die Wandung eine durchgehende seitliche Kanalwandung derart umfasst, dass sie zumindest bereichsweise dicht an die Oberseite der Dachunterkonstruktion anschließt.

Der besondere Vorteil der Erfindung besteht darin, dass die Hinterlüftungsströmung infolge der glatten Kanalunterseite und der durchgehenden Seitenwände ein nur geringer Strömungswiderstand entgegenwirkt. Hierdurch werden die rückseitige Kühlung der Photovoltaikmodule und der konvektionsbedingte Wärmeabtransport positiv beeinflusst, so dass der Wirkungsgrad und die Lebensdauer der Photovoltaikmodule steigen.

Nach einer bevorzugten Ausführungsform der Erfindung ist als ein weiteres Befestigungselement ein unteres Querprofil enthaltend einen U-förmigen Aufnahmeabschnitt mit einem Scheitel, einem äußeren Schenkel und einem inneren Schenkel sowie einem sich an den inneren Schenkel endseitig anschließenden Hakenabschnitt vorgesehen. Der traufseitige Endbereich des Photovoltaikmoduls ist in den U-förmigen Aufnahmeabschnitt des unteren Querprofils einlegbar und das untere Querprofil mittels des Hakenabschnitts in einem oberen Querprofil eines traufseitig nächsten Photovoltaikmoduls befestigbar. Durch das Vorsehen eines derartigen weiteren Befestigungsmittels wird das Photovoltaikmodul formschlüssig gegen ein traufseitiges Verrutschen gesichert. Gleichzeitig ist der Montageaufwand für das zweite Querprofil gering, da es über einen Hakenabschnitt in das dem traufseitig nächsten Photovoltaikmodul zugeordnete obere Querprofil eingehängt wird. Auf eine Befestigung des unteren Querprofils an der Dachunterkonstruktion oder der seitlichen Kanalwandung wird verzichtet. Ebenso sind keine separaten Verbindungsmittel wie Schrauben, Nieten oder Klebstoff erforderlich.

Nach einer Weiterbildung der Erfindung ist zwischen dem Aufnahmeabschnitt des unteren Querprofils und dem traufseitigen Endabschnitt des Photovoltaikmoduls zumindest bereichsweise ein Zwischenelement aus einem dauerelastischen, witterungsbeständigen Werkstoff vorgesehen. Durch das Vorsehen eines dauerelastischen Werkstoffs zwischen dem Photovoltaikmodul und dem unteren Querprofil wird einer Beschädigung des Photovoltaikmoduls vorgebeugt und eine spielfreie Lagerung desselben realisiert. Gleichzeitig können durch das elastische Zwischenelement Fertigungstoleranzen ausgeglichen werden, die bei einer Fertigung des unteren Querprofils beispielsweise als Blechbiegeteil auftreten können.

Nach einer bevorzugten Ausführungsform der Erfindung kann die untere Querstrebe als ein Haken mit einer Breite ausgeführt sein, die kleiner ist als die halbe Breite des Photovoltaikmoduls. Dem Photovoltaikmodul ist hierbei mindestens ein hakenförmiges unteres Querprofil zugeordnet. Durch das Vorsehen von mindestens einem schmalen, hakenförmigen unteren Querprofil je Photovoltaikmodul wird die Handhabbarkeit der unteren Befestigungselemente weiter verbessert. Die Montage des unteren Querprofils ist weniger anfällig gegen Fertigungstoleranzen und kann von einem einzigen Monteur vorgenommen werden. Gleichzeitig ist es möglich, die schmalen Befestigungshaken für eine Vielzahl von Photovoltaikmodulen unterschiedlicher Breite zu verwenden, da ihre Breite nicht auf die Abmessung eines bestimmten Photovoltaikmoduls abgestimmt ist.

Nach einer Weiterbildung der Erfindung erstreckt sich das obere Querprofil über eine Mehrzahl von seitlich benachbart angeordneten Photovoltaikmodulen. Durch das Vorsehen eines gemeinsamen oberen Querprofils für eine Mehrzahl benachbarter Photovoltaikmodule ist das aus Montagegesichtspunkten erforderliche, zu den Dachsparren rechtwinklige Anbringen der oberen Querprofile in einfacher Weise möglich, da ein Winkelversatz über die große Länge des oberen Querprofils zuverlässig ermittelt und in einfacher Weise behoben werden kann.

Zur Lösung der Aufgabe ist die Erfindung in Verbindung mit dem Oberbegriff des Patentanspruchs 14 **dadurch gekennzeichnet, dass** das Photovoltaikmodul in Firstrichtung so weit aus einem U-förmigen Aufnahmeabschnitt des ersten Querprofils verschoben wird, dass das Photovoltaikmodul von dem unteren Endbereich her anhebbar ist, und dass dann das Photovoltaikmodul an dem unteren Randbereich angehoben wird und dann in Traufrichtung entfernt wird. Vorteilhaft ist hierbei, dass die Demontage einzelner Photovoltaikmodule von einem einzigen Monteur vorgenommen werden kann. Die dem zu demontierenden Photovoltaikmodul seitlich, firstseitig oder traufseitig benachbarten Photovoltaikmodule müssen hierbei nicht entnommen oder gegen ein ungewolltes Verrutschen gesichert werden. Der Demontageprozess ist auf diese Weise besonders sicher und kostengünstig. Gleichzeitig ist er reversibel, dass heißt eine Montage des Photovoltaikmoduls kann sinngemäß in umgekehrter Durchführung der Demontageschritte erfolgen, wobei auch hierfür lediglich ein Monteur erforderlich ist.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:

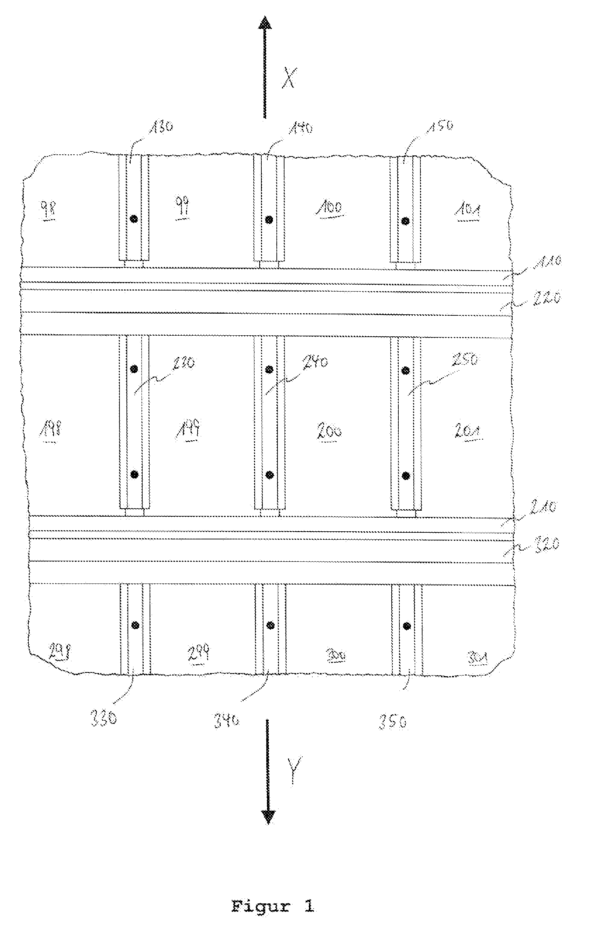

- Figur 1: eine Draufsicht auf einen Ausschnitt einer eine Mehrzahl an Photovoltaikmodulen aufweisende Dacheindeckung,
- Figur 2: einen Längsschnitt durch die Dacheindeckung gemäß Figur 1 in Erstreckungsrichtung X-Y der Dachsparren und
- Figur 3: einen Querschnitt durch die Befestigungsvorrichtung gemäß Figur 2 entlang des Schnittes A-A.

Ein Dach weist eine Mehrzahl von Photovoltaikmodulen 98, 99, 100, 101, 198, 199, 200, 201, 298, 299, 300, 301 auf, die als Indachanordnung anstelle einer aus Dachziegeln, Dachpfannen oder dergleichen bestehenden oberen Dacheindeckung auf eine Dachfläche aufgebracht sind. Die Photovoltaikmodule 98, 99, 100, 101, 198, 199, 200, 201, 298, 299, 300, 301 sind schachbrettartig angeordnet und weisen eine Mehrzahl an Reihen und Spalten mit fluchtenden, symmetrischen Längs- und Querfugen auf. Zur seitlichen Festlegung der Photovoltaikmodule 98, 99, 100, 101, 198, 199, 200, 201, 298, 299, 300, 301 auf dem Dach dient eine Mehrzahl an Längsprofilen 130, 140, 150, 230, 240, 250, 330, 340, 350, die in Erstreckungsrichtung X-Y der Dachsparren vorgesehen sind. Ferner sind die Photovoltaikmodule 98, 99, 100, 101, 198, 199, 200, 201, 298, 299, 300, 301 gegen ein traufseitiges Verrutschen durch Querprofile 110, 210, 220, 320 gesichert. Hierbei ist den in der mittleren Reihe vorgesehenen Photovoltaikmodulen 198, 199, 200, 201 an ihrem firstseitigen Endbereich ein oberes Querprofil 220 und an ihrem traufseitigen Endbereich ein unteres Querprofil 210 zugeordnet. Die Photovoltaikmodule 98, 99, 100, 101 der sich in Firstrichtung X an die mittlere Reihe anschließenden oberenReihe verfügen firstseitig über ein nicht dargestelltes oberes Querprofil sowie traufseitig über ein unteres Querprofil 110; die sich in Traufrichtung Y an die mittlere Reihe anschließende untere Reihe mit den Photovoltaikmodulen 298, 299, 300, 301 verfügt firstseitig über ein oberes Querprofil 320 und traufseitig über ein nicht dargestelltes unteres Querprofil.

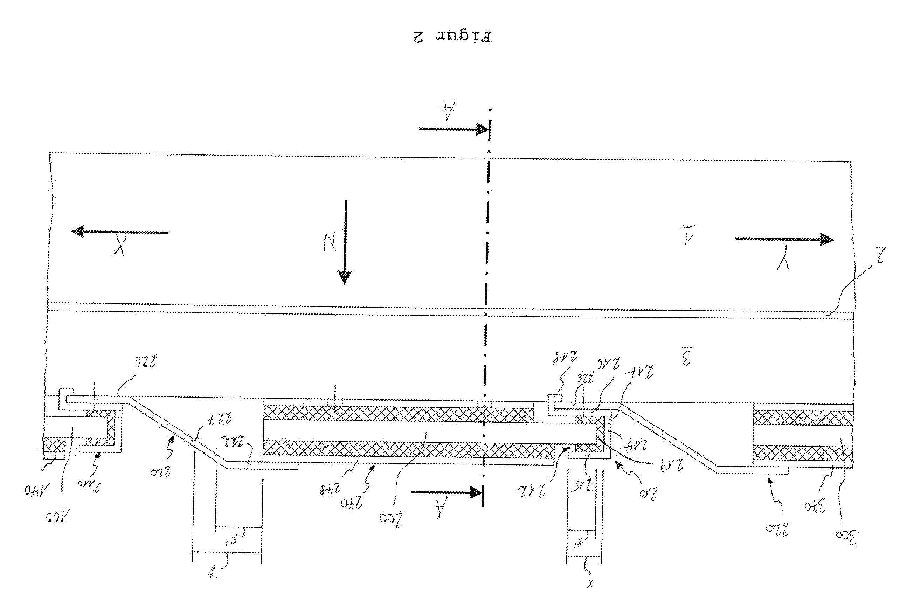

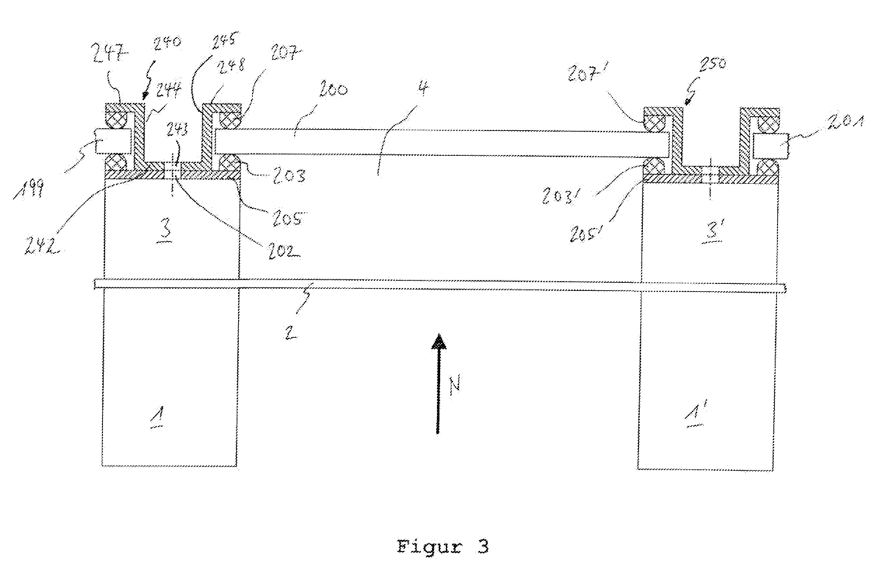

Zur Befestigung der Photovoltaikmodule 100, 200, 300 auf dem Dach weist dieses gemäß der Figuren 2 und 3 eine Dachunterkonstruktion mit Dachsparren 1, 1' und einer oberhalb der Dachsparren 1, 1' vorgesehenen, die Dachunterkonstruktion in Richtung der Photovoltaikmodule 100, 200, 300 flächig und eben abschließenden Unterspannbahn 2 auf. Anstelle der Unterspannbahn 2 kann eine anders geartete Abschlussfläche vorgesehen sein, beispielsweise eine Fläche aus Pressholzplatten. Ferner kann die Abschlussfläche (Unterspannbahn 2, Pressholzplatten oder dergleichen) auf einer oberhalb der Dachsparren 1, 1' vorgesehenen Querlattung aufgebracht werden; dies kann beispielsweise vorteilhaft sein bei der Sanierung von Dachflächen, deren Sparrenabstand nicht mit der Breite der für die Dacheindeckung vorgesehenen Photovoltaikmodule korrespondiert.

Oberhalb des Dachsparrens 1 und der Unterspannbahn 2 ist eine seitliche Kanalwand 3 vorgesehen, die in die Erstreckungsrichtung X-Y des Dachsparrens 1 orientiert ist. Der seitlichen Kanalwandung 3 sind auf der der Dachunterkonstruktion abgewandten Seite Befestigungsmittel zugeordnet, die der Festlegung der Photovoltaikmodule 100, 200, 300 dienen. Die seitliche Kanalwandung 3 kann wie dargestellt als geschlossene Fläche ausgeführt sein oder quer zur Erstreckungsrichtung X-Y Bohrungen, Aussparungen oder dergleichen aufweisen.

Die Befestigungsmittel sowie der Aufbau der Befestigungsvorrichtung werden im Folgenden exemplarisch für das Photovoltaikmodul 200 beschrieben. Die Festlegung der seitlich, trauf- und firstseitig benachbarten Photovoltaikmodule 98, 99, 100, 101, 198, 199, 201, 298, 299, 300, 301 erfolgt in analoger Weise.

Die seitliche Festlegung des Photovoltaikmoduls 200 erfolgt über die Längsprofile 240, 250; in Traufrichtung wird das Photovoltaikmodul 200 über das obere Querprofil 220 und das untere Querprofil 210 festgelegt. Ferner sind zur Festlegung ein Flachprofil 205, 205', ein unteres Dichtungsband 203, 203', ein oberes Dichtungsband 207, 207' sowie ein Zwischenelement 219 vorgesehen. Das Flachprofil 205 ist der seitlichen Kanalwand 3 auf der der Dachunterkonstruktion abgewandten Seite flächig zugeordnet und erstreckt sich zumindest bereichsweise entlang der in die Erstreckungsrichtung X-Y der Dachsparren orientierte Längsseite des Photovoltaikmoduls 200. Dem Flachprofil 205 ist auf der der Unterseite des Photovoltaikmoduls 200 zugewandten Seite zumindest bereichsweise ein unteres Dichtungsband 203 zugeordnet, welches zumindest bereichsweise an einem seitlichen Randbereich der der Dachunterkonstruktion zugewandten Unterseite des Photovoltaikmoduls 200 anliegt. Auf einem seitlichen Randbereich der der Dachunterkonstruktion abgewandten Oberseite des Photovoltaikmoduls 200 liegt ebenfalls zumindest bereichsweise ein oberes Dichtungsband 207 an, auf welchem das dem Photovoltaikmodul 200 zugeordnete Längsprofil 240 von oben anliegt und das Photovoltaikmodul 200 in Richtung N der Dachnormalen fixiert.

Zur Festlegung von zwei seitlich benachbarten Photovoltaikmodulen 199, 200 ist das Längsprofil 240 U-förmig ausgebildet mit einem Scheitelabschnitt 242 sowie einem ersten, dem Photovoltaikmodul 199 seitlich zugeordneten Schenkel 244 und einem zweiten, dem Photovoltaikmodul 200 seitlich zugeordneten zweiten Schenkel 245. Dem ersten Schenkel 244 ist endseitig ein erster Kragen 247 zur Festlegung des Photovoltaikmoduls 199 zugeordnet und dem zweiten Schenkel 245 ist endseitig ein zweiter Kragen 248 zur Festlegung des Photovoltaikmoduls 200 zugeordnet. Der Kragen 247, 248 steht hierbei senkrecht auf dem ersten Schenkel 244 bzw. dem zweiten Schenkel 245. Die beiden Schenkel 244, 245 schließen sich ihrerseits in einem rechten Winkel endseitig an den Scheitel 242 des U-förmig ausgebildeten Längsprofils 240 an.

Nach einer nicht dargestellten, alternativen Ausführungsform können die Längsprofile zur seitlichen Festlegung der Photovoltaikmodule als Z-Profil ausgeführt sein und der Festlegung eines einzigen, dem Z-förmigen Längsprofil seitlich zugeordneten Photovoltaikmoduls dienen. Ein erster Außenschenkel des Z-Profils greift wie der Kragen 248 von oben auf den seitlichen Randbereich des Photovoltaikmoduls 200, ein zweiter Außenschenkel des Z-Profils ist wie der Scheitelabschnitt 242 mit der seitlichen Kanalwandung 3 verbunden und kann hierbei zusätzlich das Flachprofil 205 fixieren. Ein Steg verbindet - analog zum Schenkel 245 des U-förmigen Längsprofils 240 - die beiden Außenschenkel des Z-Profils.

Zur Befestigung des Längsprofils 240 und des Flachprofils 205 an der seitlichen Kanalwand 3 weist das Längsprofil 204 eine Bohrung 243 und das Flachprofil 205 eine Bohrung 202, 202' auf. Über ein nicht dargestelltes Verbindungselement, beispielsweise eine Schraube oder einen Nagel, können das U-förmige Längsprofil 240 und das Flachprofil 205 mit der seitlichen Kanalwand 3 verbunden werden. Alternativ kann die Verbindung in anderer, geeignet erscheinender Form realisiert werden, beispielsweise durch Verkleben, Verschweißen oder dergleichen. Ferner kann auf das Vorsehen von Dichtungsbändern 203, 207 verzichtet werden.

Traufseitig wird das Photovoltaikmodul 200 über ein oberes Querprofil 220 festgelegt. Das obere Querprofil 220 weist einen Überdeckungsabschnitt 222, einen Verbindungsabschnitt 224 sowie einen Befestigungsabschnitt 226 auf. Der Befestigungsabschnitt 226 ist mit der seitlichen Kanalwandung 3 verbunden, beispielsweise verschraubt oder verklebt. Der Überdeckungsabschnitt 222 überdeckt von oben den firstseitigen Endbereich der dem Photovoltaikmodul 200 zugeordneten Längsprofile 240, 250. Der Überdeckungsabschnitt 222 und der Festlegabschnitt 226 sind über den Verbindungsabschnitt 224 derart verbunden, dass das obere Querprofil in der Montagestellung als Wasserleitblech derart fungiert, dass firstseitig auftreffendes Wasser über den Verbindungsabschnitt 224 und den Überdeckungsabschnitt 222 auf die der Dachunterkonstruktion abgewandte Oberseite des Photovoltaikmoduls 200 geleitet wird.

Traufseitig ist dem Photovoltaikmodul 200 ein unteres Querprofil 210 zugeordnet. Das untere Querprofil 210 enthält einen U-förmigen Aufnahmeabschnitt 212 mit einem Scheitel 214, einem äußeren Schenkel 215 und einem inneren Schenkel 216. Der Scheitel 214 ist dem Photovoltaikmodul 200 traufseitig zugeordnet; der äußere Schenkel 215 überdeckt den traufseitigen Endbereich des Photovoltaikmoduls 200 und legt dieses in Richtung der Dachnormalen N fest.

An den inneren Schenkel 216 schließt sich endseitig ein beispielsweise L-förmiger Hakenabschnitt 218 an. Der traufseitige Endabschnitt des Photovoltaikmoduls 200 wird von dem U-förmigen Aufnahmeabschnitt 212 des unteren Querprofils 210 festgelegt. Zwischen dem traufseitigen Endbereich des Photovoltaikmoduls 200 und dem U-förmigen Aufnahmeabschnitt 212 kann hierbei ein beispielsweise als einem dauerelastischen, witterungsbeständigen Werkstoff ausgeführtes Zwischenelement 219 angeordnet sein, das zum einen der schonenden Lagerung des Photovoltaikmoduls 200 sowie dessen Schutz vor Beschädigung und zum anderen den Ausgleich von geometrischen Varianzen sowie der spielfreien Festlegung des Photovoltaikmoduls 200 dient. Das untere Querprofil 210 wird über den L-förmigen Hakenabschnitt 218 in das obere Querprofil 320 des traufseitig nächsten Photovoltaikmoduls 300 eingehängt. Der innere Schenkel 216 des U-förmigen Aufnahmeabschnitts 212 liegt hierbei flächig von oben auf dem Festlegeabschnitt 326 des oberen Querprofils 320 auf.

Durch die Befestigung des unteren Querprofils 210 an dem oberen Querprofil 320 des traufseitig nächsten Photovoltaikmoduls 300 stützen sich die Kräfte, die sich aus der Gewichtskraft des Photovoltaikmoduls 200, eventuell vorhandenen Montagekräften und sonstigen Belastungen (Windlasten) ergeben, über das untere Querprofil 210 am oberen Querprofil 320 ab. Von dort werden sie über die seitlichen Kanalwandungen 3, 3' an der Dachunterkonstruktion abgestützt.

Das untere Querprofil 210 kann sich über eine Mehrzahl benachbarter Photovoltaikmodule 198, 199, 200, 201 erstreckem. Alternativ kann ein Querprofil vorgesehen sein, das sich über die gesamte Breite oder einem Teilabereich des traufseitigen Endbereichs eines Photovoltaikmoduls 200 erstreckt. Abhängig von der Breite des unteren Querprofils 210 kann beispielsweise in dem Scheitel 214 des U-förmigen Aufnahmeabschnitts 212 wenigstens eine Bohrung 217 vorgesehen sein, über die im montierten Zustand firstseitig in den U-förmigen Aufnahmeabschnitt 212 eintretendes Wasser auf das unterhalb des Querprofils 210 vorgesehene, dem traufseitig nächsten Photovoltaikmodul 300 zugeordnete obere Querprofil 320 abgeleitet wird.

Bevorzugt kann vorgesehen sein, dass das Querprofil 210 als Haken ausgeführt ist und eine geringe Breite aufweist, beispielsweise 20 cm oder weniger. Ein Photovoltaikmodul 200 wird über mindestens einen Haken 210 in dem oberen Querprofil 320 des traufseitig nächsten Photovoltaikmoduls 300 befestigt. Je nach Ausführungsform dieser hakenförmigen Profile 210 kann firstseitig eintretendes Wasser seitlich ausströmen und auf die Ausbildung einer Entwässerungsbohrung 217 verzichtet sein.

Statt eines U-förmigen Aufnahmeabschnitts 212 kann das untere Querprofil 210 nach einer nicht dargestellten alternativen Ausführungsform einen L-förmigen Aufnahmeabschnitt 212' vorsehen, bei dem auf die Ausbildung eines dem äußeren Schenkel 215 entsprechenden, den traufseitigen Endbereich eines Photovoltaikmoduls von oben überdeckenden Festlegeabschnitt verzichtet wird. Die Fixierung des Photovoltaikmoduls in Richtung der Dachnormalen N erfolgt hierbei allein über das obere Querprofil 220 und das im Photovoltaikmodul 200 seitlich zugeordnete Längsprofil 240. Traufseitig wird das Photovoltaikmodul 200 über den am inneren Schenkel 216 endseitig befestigten Scheitel 214 festgelegt.

Ferner kann auf das Ausführen des L-förmigen Hakenabschnitts 218 verzichtet werden. Das untere Querprofil wird dann nicht in das obere Querprofil 320 des traufseitig nächsten Photovoltaikmoduls 300 eingehakt, sondern anderweitig mit diesem verbunden, beispielsweise verschraubt, verschweißt, verklebt, vernietet oder dergleichen. In diesem Fall können das untere Querprofil 210 des Photovoltaikmoduls 200 und das obere Querprofil 320 des unteren Photovoltaikmoduls 300 in einem gemeinsamen Arbeitsschritt auf die seitlichen Kanalwandungen 3, 3' aufgebracht werden.

Die Unterspannbahn 2 bildet zusammen mit den seitlichen Kanalwänden 3, 3', den Flachprofilen 205, 205', den unteren Dichtungsbändern 203, 203' und der der Dachunterkonstruktion zugewandten Rückseite des Photovoltaikmoduls 200 einen Hinterlüftungskanal 4, der sich in die Richtung X-Y der Dachsparren von der Traufe bis zum First erstreckt. Der Hinterlüftungskanal 4 kann hierbei mittels geeigneter Ausgestaltung der seitlichen Kanalwände 3, 3' in seiner Höhe den hinsichtlich der erforderlichen Kühlung notwendigen Anforderungen angepasst werden. Aufgrund des Verzichts auf die Querlattung ist der Strömungsquerschnitt nicht gestört, so dass eine Hinterluftströmung die Rückseite der Photovoltaikmodule 98, 99, 100, 101, 198, 199, 200, 201, 298, 299, 300, 301 optimal umströmen und kühlen kann. Eine kurzfristige Reduzierung des Querschnitts-Strömungskanals ergibt sich allerdings durch das quer zu den Dachsparren 1, 1' und den seitlichen Kanalwänden 3, 3' verlaufende obere Querprofil 220, das hierein eingehängte untere Querprofil 210 sowie eine möglicherweise auf der Rückseite des Photovoltaikmoduls 200 vorgesehene, vorteilhafter Weise ebenfalls zu kühlende und nicht dargestellte Modulanschlussdose zur elektrischen Kontaktierung des Photovoltaikmoduls 200. Auf die Darstellung des oberen Querprofils 220 und des unteren Querprofils 210 ist aus Gründen der Übersichtlichkeit in Figur 3 verzichtet worden.

Der Hinterlüftungskanal 4 kann durch eine alternative Gestaltung beispielsweise der seitlichen Kanalwände 3, 3' eine abweichende Geometrie erhalten. So können die seitlichen Kanalwände 3, 3' nach einer nicht dargestellten Ausführungsform uneben und/oder nicht senkrecht zu der die untere Kanalwandung bildende Unterspannbahn 2 ausgeführt sein mit der Folge, dass die seitlichen Kanalwände 3, 3' konvexe oder konkave Oberflächen aufweisen können und/oder durch Schrägstellung der seitlichen Kanalwände 3, 3' zueinander ein trapezförmiger Querschnitt des Hinterlüftungskanals 4 realisiert wird. Ebenso ist denkbar, dass sich der Hinterlüftungskanal 4 in Firstrichtung X oder in Traufrichtung Y verjüngt, indem die seitlichen Kanalwandungen 3, 3' einen in die Erstreckungsrichtung X-Y der Dachsparren abnehmenden bzw. zunehmenden Abstand zueinander aufweisen.

Neben der verbesserten Hinterlüftung der Photovoltaikmodule 98, 99, 100, 101, 198, 199, 200, 201, 298, 299, 300, 301 vereinfacht sich durch die vorgesehene Befestigungsvorrichtung die Montage und Demontageprozess der Photovoltaikmodule signifikant. Hierzu bildet die obere Querstrebe 220 zusammen mit der unteren Querstrebe 210 eine Tasche mit einer Öffnung zur Aufnahme des Photovoltaikmoduls 200. Das Photovoltaikmodul 200 ist durch die Öffnung aus der von dem oberen Querprofil 220 und dem unteren Querprofil 210 gebildeten Tasche entnehmbar bzw. in diese hineinlegbar.

Der Demontageprozess wird nachfolgend am Beispiel des Photovoltaikmoduls 200 gemäß der Figuren 2 und 3 dargestellt. In einem ersten Schritt werden die beiden dem Photovoltaikmodul 200 seitlich zugeordneten Längsprofile 240, 250 gelöst und entnommen. Anschließend wird das Photovoltaikmodul in Firstrichtung X in der von dem oberen Querprofil 220 und dem unteren Querprofil 210 gebildeten Tasche soweit in Firstrichtung verschoben, dass der traufseitige Endabschnitt des Photovoltaikmoduls 200 aus dem U-förmigen Aufnahmeabschnitt 212 des unteren Querprofils 210 heraustritt. Bei dem Aufbringen des oberen Querprofils 220 und des unteren Querprofils 210 ist dazu auf eine Beabstandung der Profile 210, 220 zu achten, die es erlaubt, dass die firstseitige Verschiebelänge s größer ist als die traufseitige Eintauchtiefe x. Sofern das obere Dichtungsband 207 zusammen mit dem Photovoltaikmodul 200 in Firstrichtung verschoben wird, ergibt sich die Verschiebelänge zu s'. Entsprechend ergibt sich die Eintauchtiefe zu x', sofern das Zwischenelement 219 zusammen mit dem Photovoltaikmodul in Firstrichtung verschoben wird.

Nachdem der traufseitige Endabschnitt des Photovoltaikmoduls 200 aus dem U-förmigen Aufnahmeabschnitt 212 des unteren Querprofils 210 entnommen wurde und frei liegt, kann dieser in Richtung N der Dachnormalen angehoben werden. Das Photovoltaikmodul 200 wird anschließend in Traufrichtung Y aus der Tasche entnommen. Sofern das untere Dichtungsband 203, das obere Dichtungsband 207 und/oder das Zwischenelement 219 beispielsweise durch Anhaften mit dem Photovoltaikmodul 200 verbunden sind, können diese zusammen mit dem Photovoltaikmodul 200 demontiert werden. Es sei an dieser Stelle angemerkt, dass zusätzlich zu den die mechanischen Befestigungselemente des Photovoltaikmoduls 200 betreffende Entnahmeschritten eine elektrische Dekontaktierung, beispielsweise durch Lösen eines der Modulanschlussdose zugeordneten Verbindungssteckers, vorgenommen werden muss.

Der Montageprozess verläuft in ähnlicher, wenn auch umgekehrter Reihenfolge: Zunächst wird der firstseitige Endabschnitt des Photovoltaikmoduls 200 in Firstrichtung X unter den Überdeckungsabschnitt 222 des oberen Querprofils 220 geschoben, und zwar soweit, bis der traufseitige Endabschnitt des Photovoltaikmoduls 200 dem Dachfirst näher ist als der firstseitige Endbereich des äußeren Schenkels 215 des U-förmigen Aufnahmeabschnitts 212 des unteren Querprofils 210. Das Photovoltaikmodul 200 wird dann mit seinem traufseitigen Endabschnitt entgegen der Richtung N der Dachnormalen in Richtung der Dachunterkonstruktion verbracht und an das Flachprofil 205, 205' angelegt. Nach dem Anliegen an das Flachprofil 205, 205' wird das Photovoltaikmodul 200 in Traufrichtung Y in den U-förmigen Aufnahmeabschnitt 212 des unteren Querprofils 210 verschoben. Abschließend werden die seitlichen Längsprofile 240, 250 auf die seitlichen Randbereiche des Photovoltaikmoduls 200 aufgelegt und zusammen mit dem Flachprofil 205, 205' mit der seitlichen Kanalwand 3, 3' verbunden. Auf die Darstellung der Montage des zwischen dem Flachprofil 205, 205' und dem Photovoltaikmodul 200 vorgesehenen unteren Dichtungsbands 203, 203', des zwischen dem Photovoltaikmodul 200 und dem Längsprofil 240, 250 vorgesehenen oberen Dichtungsbands 207, 207' sowie des Zwischenelements 219 und der elektronischen Kontaktierung wurde aus Vereinfachsgründen verzichtet. Sie sind im Rahmen der Montage entsprechend vorzusehen.

## Patentansprüche

1. Vorrichtung zur Befestigung von Photovoltaikmodulen an einer Dachunterkonstruktion, wobei
- die Photovoltaikmodule insbesondere zur Indachmontage über Befestigungsmittel direkt an der Dachunterkonstruktion befestigbar sind,
- die Befestigungsmittel ein den Photovoltaikmodulen seitlich zugeordnetes Längsprofil und ein dem Photovoltaikmodul firstseitig zugeordnetes oberes Querprofil umfassen,
- ein den Photovoltaikmodulen auf der der Dachunterkonstruktion zugewandten Rückseite zugeordneter Hinterlüftungskanal zur rückseitigen Kühlung der Photovoltaikmodule mittels einer Hinterlüftungsströmung ausgebildet ist,
- als weiteres Befestigungsmittel eine in Richtung der Dachunterkonstruktion von dem rückseitigen Randbereich des Photovoltaikmoduls abragende Wandung vorgesehen ist, die den Hinterlüftungskanal begrenzt, und
- die dem Photovoltaikmodul zugewandte Oberseite der Dachunterkonstruktion eine untere Kanalwandung des Hinterlüftungskanals bildet,
**dadurch gekennzeichnet, dass**
- die Dachunterkonstruktion eine ebene, die unter Kanalwandung (3, 3') bildende Oberseite (Unterspannbahn 2) aufweist und
- die Wandung eine durchgehende seitliche Kanalwandung (3, 3') derart umfasst, dass sie zumindest bereichsweise dicht an die Oberseite (2) der Dachunterkonstruktion anschließt.

2. Vorrichtung nach Anspruch 1, **dadurch gekennzeichnet, dass** die seitliche Kanalwandung (3, 3') eben ausgebildet ist.

3. Vorrichtung nach Anspruch 1 oder 2, **dadurch gekennzeichnet, dass** die seitliche Kanalwandung (3, 3') und/oder die die untere Kanalwandung (2) bildende Oberseite der Dachunterkonstruktion als glatte Fläche ausgebildet sind.

4. Vorrichtung nach einem der Ansprüche 1 bis 3, **dadurch gekennzeichnet, dass** der Hinterlüftungskanal (4) einen konstanten Querschnitt in Richtung (X-Y) der Hinterlüftungsströmung aufweist.

5. Vorrichtung nach einem der Ansprüche 1 bis 4, **dadurch gekennzeichnet, dass** als weiteres Befestigungsmittel ein unteres Querprofil (210) enthaltend einen U-förmigen Aufnahmeabschnitt (212) mit einem Scheitel (214), einem äußeren Schenkel (215) und einem inneren Schenkel (216) sowie einem sich an den inneren Schenkel endseitig anschließenden Hakenabschnitt (218) vorgesehen ist, wobei der traufseitige Endbereich des Photovoltaikmoduls (200) in den U-förmigen Aufnahmeabschnitt (212) des unteren Querprofils (210) einlegbar ist und das untere Querprofil (210) mittels des Hakenabschnitts (218) an einem oberen Querprofil (320) eines traufseitig nächsten Photovoltaikmoduls (300) befestigbar ist.

6. Vorrichtung nach einem der Ansprüche 1 bis 5, **dadurch gekennzeichnet, dass** als weiteres Befestigungsmittel ein unteres Querprofil enthaltend einen L-förmigen Aufnahmeabschnitt (212') mit einem Scheitel (214) und einem inneren Schenkel (216) sowie einem sich an den inneren Schenkel (216) endseitig anschließenden Hakenabschnitt (218) vorgesehen ist, wobei der traufseitige Endbereich des Photovoltaikmoduls (200) in den L-förmigen Aufnahmeabschnitt des unteren Querprofils (210) einlegbar ist und das untere Querprofil (210) mittels des Hakenabschnitts (218) an einem oberen Querprofil (320) eines traufseitig nächsten Photovoltaikmoduls (300) befestigbar ist.

7. Vorrichtung nach einem der Ansprüche 1 bis 6, **dadurch gekennzeichnet, dass** zwischen dem Aufnahmeabschnitt (212, 212') des unteren Querprofils (210) und dem traufseitigen Endabschnitt des Photovoltaikmoduls (200) zumindest bereichsweise ein Zwischenelement (219) aus einem dauerelastischen, witterungsbeständigen Werkstoff vorgesehen ist.

8. Vorrichtung nach einem der Ansprüche 1 bis 7, **dadurch gekennzeichnet, dass** der Aufnahmeabschnitt (212, 212') eine Bohrung (217) aufweist, derart, dass im montierten Zustand Wasser aus dem Aufnahmeabschnitt (212, 212') auf das unterhalb des unteren Querprofils (210) vorgesehene obere Querprofil (320) des traufseitig nächsten Photovoltaikmoduls (300) ableitbar ist.

9. Vorrichtung nach einem der Ansprüche 1 bis 8, **dadurch gekennzeichnet, dass** die untere Querstrebe (210) als ein Haken mit einer Breite ausgeführt ist, die kleiner ist als die halbe Breite des Photovoltaikmoduls (200), und dass dem Photovoltaikmodul (200) mindestens ein hakenförmiges untere Querprofil (210) zugeordnet ist.

10. Vorrichtung nach einem der Ansprüche 1 bis 9, **dadurch gekennzeichnet, dass** sich das obere Querprofil (220) und/oder das untere Querprofil (210) entlang einer Mehrzahl von seitlich benachbart angeordneten Photovoltaikmodule (198, 199, 200, 201) erstreckt.

11. Vorrichtung nach einem der Ansprüche 1 bis 10, **dadurch gekennzeichnet, dass** das obere Querprofil (220) einen Überdeckungsabschnitt (222) aufweist, der von oben auf einer Oberseite des firstseitigen Endbereichs des Längsprofils (240, 250) aufliegt.

12. Vorrichtung nach einem der Ansprüche 1 bis 11, **dadurch gekennzeichnet, dass** das dem Photovoltaikmodul (200) zugeordnete untere Querprofil (210) mit dem oberen Querprofil (220) eine Tasche mit einem Taschenraum eine solchen Länge bildet, dass das Photovoltaikmodul (200) durch eine Öffnung der Tasche zum einen in die Montagestellung einsetzbar und zum anderen aus der Montagestellung entnehmbar ist.

13. Vorrichtung nach einem der Ansprüche 1 bis 12, **dadurch gekennzeichnet, dass** die Eintauchtiefe (x) des Photovoltaikmoduls (200) in den U-förmigen Aufnahmeabschnitt (212) des unteren Querprofils (210) geringer ist als die dem Photovoltaikmodul (200) firstseitig zugeordnete und von dem oberen Querprofil (220) begrenzte Verschiebelänge (s).

14. Verfahren zur Demontage eines Photovoltaikmoduls, wobei das Photovoltaikmodul in einer Montagestellung an einem unteren Randbereich von einem ersten Querprofil und an einem oberen Randbereich von einem zweiten Querprofil festgelegt wird, **dadurch gekennzeichnet, dass** das Photovoltaikmodul (200) in Firstrichtung (X) so weit aus einem U-förmigen Aufnahmeabschnitt (212) des unteren Querprofils (210) verschoben wird, dass das Photovoltaikmodul (200) von dem unteren Randbereich her anhebbar ist, und dass dann das Photovoltaikmodul (200) an dem unteren Randbereich angehoben wird und dann in Traufrichtung (Y) entfernt wird.
